# EUROPEAN PATENT APPLICATION

(11) **EP 4 742 083 A1**
(43) Date of publication of application: **13.05.2026**
(21) Application number: 25215050.3
(22) Date of filing: 11.11.2025
(51) Int. Cl.: G06F 40/174, H04W 8/18

(54) **DYNAMICALLY POPULATING A WEBPAGE IN REAL TIME WITH CONTENT FROM A CAPTURED IMAGE**

(30) Priority: 11.11.2024 US 202463718862 P
(71) Applicant: Fortrea Inc., Durham, NC 27703 (US)
(72) Inventor: Kobin, Henry Roy, Durham, 27703 (US); Robertson, Zachary Clement, Durham, 27703 (US); Abdollahnejadbarough, Hossein, Durham, 27703 (US); Dolan, Brian David, Durham, 27703 (US)
(74) Representative: Slingsby Partners LLP

(57) **Abstract**

In one example, a system can establish a communication channel with a first client device displaying a webpage. The system can also receive an image and a unique identifier of the communication channel from a second client device. The system can provide the image as input to a model, which can extract and output content from the image. Based on the unique identifier, the system can select the communication channel as a destination for the content extracted from the image. The system can then transmit the content to the first client device via the communication channel to update the webpage to include the content in real time.

## Description

### Technical Field

The present disclosure relates generally to webpages. More specifically, but not by way of limitation, this disclosure relates to dynamically populating a webpage in real time with content from a captured image.

### Background

It has become increasingly commonplace for webpages to be dynamically updated in real-time during user interactions to display new content. By using technologies such as AJAX (Asynchronous JavaScript and XML), WebSockets, and server-sent events, modern web applications can seamlessly fetch and render updated data without requiring a full page reload. This dynamic updating capability enhances user experience by providing instantaneous feedback and more interactive, responsive interfaces. As users perform actions such as filling out forms, selecting menu options, or navigating through content, the webpage can automatically refresh specific elements to reflect changes, display relevant information, or suggest further actions. This not only improves the efficiency and fluidity of user interactions, but also reduces server load and bandwidth usage by minimizing redundant data transfers and page reloads.

### Summary

One example of the present disclosure includes a server system comprising one or more processors and one or more memories. The one or more memories store instructions that are executable by the one or more processors for causing the one or more processors to perform operations. The operations include establishing a communication channel with a first client device of a user for updating a webpage displayed on the first client device. The operations include receiving an image over a network from a second client device. The operations include receiving a unique identifier of the communication channel over the network from the second client device. The operations include, based on receiving the image from the second client device, providing the image as input to a model, the model being configured to extract and output content of the image. The operations include, based on receiving the unique identifier from the second client device, selecting the communication channel as a destination for the content extracted from the image. The operations include, based on selecting the communication channel as the destination, transmitting the content to the first client device via the communication channel to update the webpage to include the content in real time.

Another example of the present disclosure includes a method of operations. The operations include establishing a communication channel with a first client device of a user for updating a webpage displayed on the first client device. The operations include receiving an image over a network from a second client device. The operations include receiving a unique identifier of the communication channel over the network from the second client device. The operations include, based on receiving the image from the second client device, providing image as input to a model, the model being configured to extract and output content of the image. The operations include, based on receiving the unique identifier from the second client device, selecting the communication channel as a destination for the content extracted from the image. The operations include, based on selecting the communication channel as the destination, transmitting the content to the first client device via the communication channel to update the webpage to include the content in real time. Some or all of the operations can be implemented by a server system.

Yet another example of the present disclosure includes a non-transitory computer-readable medium comprising program code that is executable by one or more processors for causing the one or more processors to perform operations. The operations include establishing a communication channel with a first client device of a user for updating a webpage displayed on the first client device. The operations include receiving an image over a network from a second client device. The operations include receiving a unique identifier of the communication channel over the network from the second client device. The operations include, based on receiving the image from the second client device, providing image as input to a model, the model being configured to extract and output content of the image. The operations include, based on receiving the unique identifier from the second client device, selecting the communication channel as a destination for the content extracted from the image. The operations include, based on selecting the communication channel as the destination, transmitting the content to the first client device via the communication channel to update the webpage to include the content in real time.

The first client device may be the same as the second client device or different than the second client device.

In some implementations the unique identifier may be embedded in a barcode displayed on the webpage. The second client device may be configured to extract the unique identifier from the barcode by scanning the barcode on the webpage. The second client device may also be configured to, after extracting the unique identifier from the barcode on the webpage, transmit the unique identifier over the network to the server system, capture the image using an imaging device, and after capturing the image, transmit the image over the network to the server system. In some examples, the barcode may be a Quick Response (QR) code.

The image may depict a data table, and the content may include textual or numerical content in the data table. The model may be a trained large language model (LLM) that is configured to analyze the image to identify columns and rows forming cells of the data table, analyze the image to extract the content from the cells of the data table, and generate the output in a declarative format that correlates the content to one or more specific portions of the webpage. The declarative format may ben' a JavaScript Object Notation (JSON) format or an eXtensible Markup Language (XML) format.

In some implementations, the webpage may include a form, and the operations may further comprise automatically populating the form with the content.

In some implementations, the operations may further comprise, after transmitting the content to the first client device via the communication channel: receiving an identifier of missing data from the first client device via the communication channel, the missing data being absent from the content, transmitting a request for the missing data to the user, receiving a response that includes the missing data from the user, and transmitting the missing data to the first client device via the communication channel to update the webpage to include the missing data in real time.

The communication channel can be a Websocket channel.

The communication channel may be selected from among a plurality of communication channels corresponding to a plurality of webpages.

Any of the above-discussed optional features may be implemented as part of the above-mentioned method and/or in the program code stored in the above-mentioned non-transitory computer-readable medium and/or in the instructions stored in the one or more memories of the above-mentioned server system.

### Brief Description of the Drawings

FIG. 1 shows a block diagram of an example of a system for dynamically populating a webpage in real time with content from a captured image according to some aspects of the present disclosure.
FIG. 2 shows a block diagram of an example of a system in which a webpage has been dynamically populated with content from a captured image according to some aspects of the present disclosure.
FIG. 3 shows a block diagram of an example of a system for dynamically populating a webpage with missing data according to some aspects of the present disclosure.
FIG. 4 shows a block diagram of an example of a system that includes multiple client devices for dynamically populating a webpage in real time with content from a captured image according to some aspects of the present disclosure.
FIG. 5 shows a block diagram of an example of a system for dynamically populating a webpage in real time with content from a captured image of a physical document according to some aspects of the present disclosure.
FIG. 6 shows a sequence diagram of an example of a process for dynamically populating a webpage in real time with content from a captured image according to some aspects of the present disclosure.
FIG. 7 shows an example of a content update in a declarative format according to some aspects of the present disclosure.
FIG. 8 shows a flowchart of an example of a process for dynamically populating a webpage in real time with content from a captured image according to some aspects of the present disclosure.
FIG. 9 shows a block diagram of an example of a computing device usable to implement some aspects of the present disclosure.

### Detailed Description

Certain aspects and features of the present disclosure relate to automatically updating a webpage with content extracted from an image, in real time while a user is viewing the webpage. For example, a user can operate a mobile device to capture an image of target content. The user can then operate the mobile device to upload the image to a backend server system, which can extract the target content from the image and update a webpage in real time with the extracted content, while the webpage is displayed to the user or another user. If the user then operates the mobile device to capture and upload additional images, the images' content can likewise be extracted and incorporated into the webpage in real time. For example, new content extracted from the additional images may be added to the webpage, without removing any existing data from the webpage, or may be used to overwrite existing data in the webpage.

In some examples, the user can operate the mobile device to capture an image of another webpage, which can contain the target content. Alternatively, the user can operate the mobile device to capture an image of a physical document or another physical item, which can contain the target content. Either way, after the image is uploaded to the backend server system, the backend server system can perform object character recognition (OCR) and/or other image processing techniques to extract the target content from the image. For example, the backend server system can provide the image as input to a machine-learning model, such as a trained large language model, which can process the image to extract the target content from the image. The backend server system can then transmit the extracted content through an established communication channel to the webpage, so that the webpage can be automatically updated in real time with the target content. This automatic update can be implemented using AJAX, WebSockets, server-sent events, or any other technology for updating webpages in real time without a full page reload.

In some examples, the mobile device can transmit a unique identifier associated with the webpage to the backend server system, to notify the backend server system of which webpage is the intended destination for the target content extracted from the image. The unique identifier may be a numeric or alphanumeric identifier associated with the webpage. Based on the unique identifier, the backend server system can determine which webpage to populate with the target content, since the backend server system may be responsible for managing multiple webpages concurrently. This may help prevent the target content from accidentally being inserted into the wrong webpage session.

In some examples, the unique identifier can be acquired from the webpage. For example, the webpage may display the unique identifier in a plaintext or encoded format. If the unique identifier is in a plaintext format, the user may manually enter the unique identifier into the mobile device, which can transmit the unique identifier to the backend server system. If the unique identifier is displayed as a barcode (e.g., a QR code) or another encoded format, the user may operate the mobile device to automatically scan it, extract the unique identifier, and transmit the unique identifier to the backend server system. This can help expedite the process of acquiring and transmitting the unique identifier from the mobile device to the backend server system.

Using the techniques described herein, a webpage can be automatically populated with target content from an image in real time, while a user is viewing the webpage on a client device. This may be useful in a variety of contexts. For example, the webpage may include a form with multiple empty fields to be filled out by the user. In a conventional scenario, the user may have to manually fill out all the fields, which can be slow and error prone, especially if there are a large number of fields. And such errors may cascade, leading to further errors downstream. But in some examples of the present disclosure, the user may simply capture an image of a data table that has the required data for the form fields. The data table may be printed on a physical document or displayed in another webpage. The image can then be uploaded to the backend server system, which can automatically extract the data from the surrounding data table and transmit it to the client device. In response, the client device can dynamically and automatically populate the empty fields of the webpage in real time with the data, which can significantly expedite the data entry process and reduce errors.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

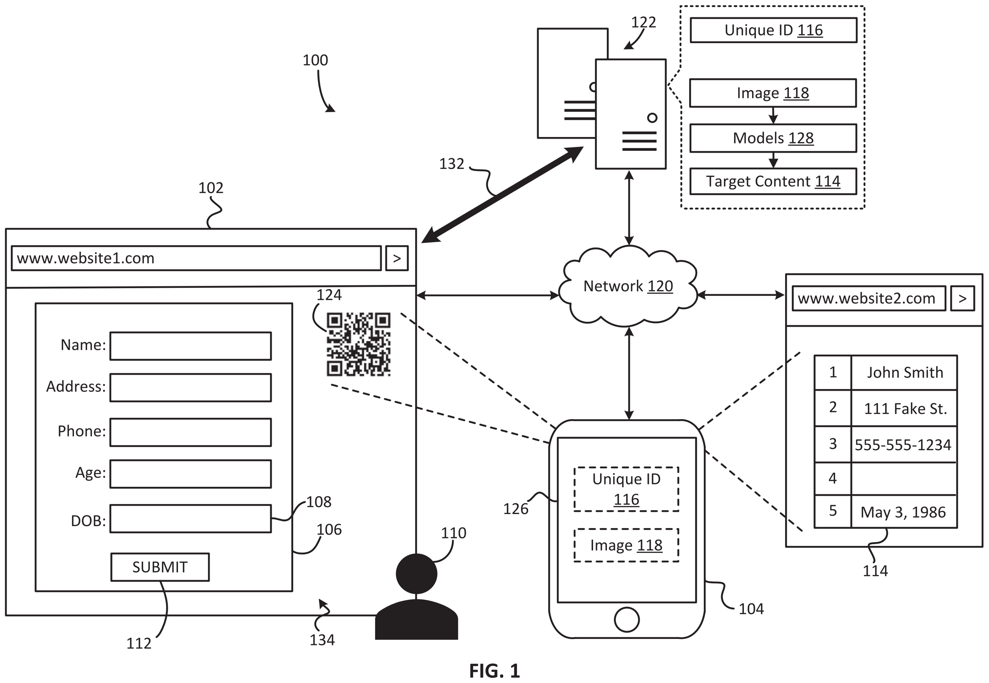

FIG. 1 shows a block diagram of an example of a system 100 for dynamically populating a webpage 134 in real time with content from a captured image 118 according to some aspects of the present disclosure. The system 100 includes a browser 102 displaying the webpage 134 to a viewer 110. The webpage 134 may have any suitable content, such as a form 106 with any number of fields 108. The webpage 134 may be provided by a backend server system 122, which may include any number and combination of servers such as webservers. The webpage 134 may be displayed on any suitable client device, such as a laptop computer, desktop computer, mobile phone, tablet, e-reader, or wearable device (e.g., a smart watch).

In this example, the viewer 110 of the webpage 134 may need to fill out the form 106, which may normally be cumbersome and error prone. To help automate this process, the viewer 110 or another user can operate a client device 104. The client device 104 may be the same client device on which the webpage 134 is displayed or a different client device. The user can operate the client device 104 to capture an image 118 of target content 114, which can be used to fill in the fields 108 of the form 106. The target content 114 may be present on a physical object or, alternatively, may be displayed in a webpage or another virtual medium. The client device 104 can capture the image 118 of the target content 114 using an attached camera. After capturing the image 118 of the target content 114, the client device 104 can upload the image 118 to the backend server system 122 via a network 120, such as the Internet.

The backend server system 122 can receive the image 118 and process the image 118 using one or more text extraction models 128. The text extraction models 128 can be configured to extract the target content 114 from the rest of the image 118. For example, the target content 130 may be textual and/or numerical content, which can be extracted from a data table depicted in the image 118. In this example, the target content 130 may exclude the column headings and row headings of the data table. Thus, the target content 130 may only consist of the cell data from the data table.

The text extraction models 128 can include optical character recognition models and/or machine-learning models. For example, the text extraction models 128 can include Named Entity Recognition (NER) models, rule-based pattern matching systems, machine learning models like Conditional Random Fields (CRFs), deep learning models like recurrent neural networks (RNNs) and transformers (e.g., BERT, GPT-3), and/or specialized document layout models like LayoutLM. In some examples, the text extraction model 128 can include a large language model that has been trained to parse textual content from images.

In some examples, the client device 104 may also transmit a unique identifier 116 associated with the webpage 134 to the backend server system 122 via the network 120. This may help to notify the backend server system 122 of the intended destination for the target content 114. In some examples, the unique identifier 116 may uniquely identify a communication channel 132 previously established between the backend server system 122 and the webpage 134. The communication channel 132 can be for allowing dynamic updates to the webpage 134 without requiring a full page reload. One example of such a communication channel 132 may be a WebSocket connection.

In some examples, the unique identifier 116 can be acquired from the webpage 134. For example, the webpage 134 may display the unique identifier 116 (e.g., in a raw or encoded format) so that it can be obtained by the client device 104. In the example shown in FIG. 1, the unique identifier 116 is encoded in a barcode 124 displayed on the webpage 134 concurrently with the form 106. The client device 104 can scan the barcode 124 using the attached camera and then extract the unique identifier 116 from the barcode 124 for transmission to the backend server system 122.

The backend server system 122 can determine where to send the target content 114 extracted from the image 118 based on the unique identifier 116. For example, the backend server system 122 may maintain multiple communication channels with multiple webpages that it is concurrently serving to multiple users. To help prevent one user's content from being inadvertently sent to another user's webpage session, the backend server system 122 can rely on the unique identifier 116 to identify the correct communication channel 132 associated with the webpage 134. For example, the unique identifier 116 may itself be an address or name of a communication channel 132 (e.g., WebSocket connection) between the backend server system 122 and the webpage 134, such that the unique identifier 116 can be directly used as the destination for the target content 114. As another example, the backend server system 122 can store a mapping that correlates unique identifiers with communication channels. Using the mapping, the backend server system 122 can determine which communication channel 132 corresponds to the unique identifier 116. After determining the communication channel 132 based on the unique identifier 116, the backend server system 122 can transmit the target content 114 to the client device displaying the webpage 134 via the communication channel 132. In response to receiving the target content 114, the client device can automatically update the webpage 134, without performing a full page reload.

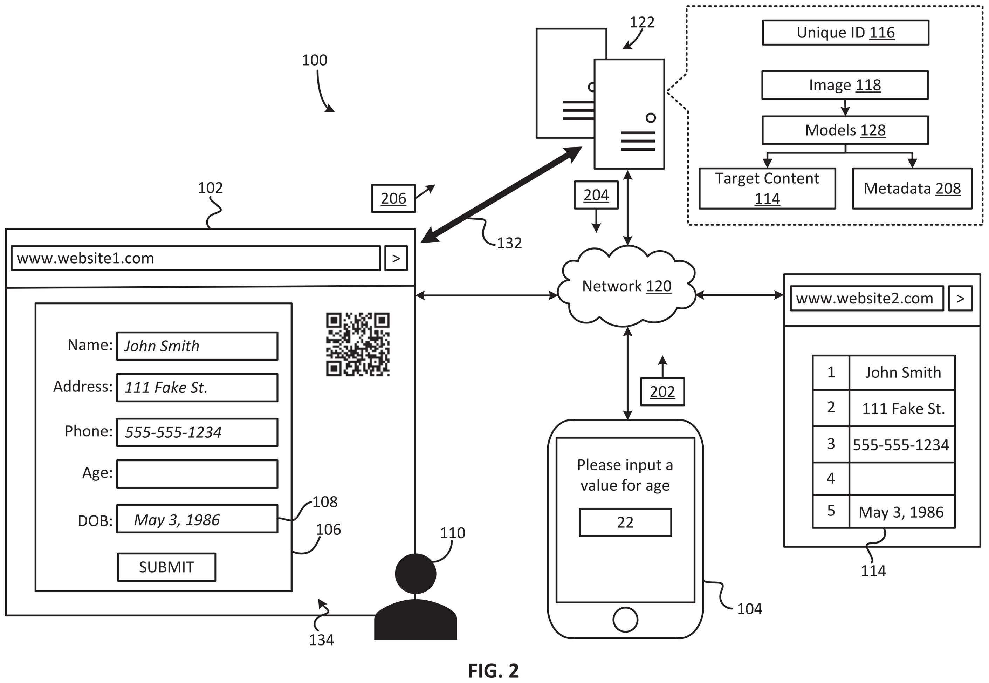

One example of the updated webpage 134 is shown in FIG. 2. As shown, the fields 108 of the form 106 have been dynamically populated with the target content 114. To help ensure that the target content 114 is inserted into the correct parts of the webpage 134, in some examples the backend server system 122 can generate metadata 208 corresponding to the target content 114. For instance, the text extraction model 128 can generate the metadata 208 as part of its processing of the image. The metadata 208 can indicate a location at which each part of the target content 114 should be incorporated into the webpage 134. The metadata 208 can be transmitted to the client device to help ensure that the correct parts of the webpage 134 are populated with the corresponding parts of the target content 114.

For example, the text extraction model 128 can output the target content 114 in a declarative format, such as a JavaScript Object Notation (JSON) or eXtensible Markup Language (XML) format. The declarative format can include metadata 208 such as tags that identify which parts of the target content 114 belong to which fields 108 of the form 106. The client device can then use the tags to populate the different parts of the target content 114 into the corresponding fields 108 of the webpage 134. For example, the metadata 208 can include <name></name>, <address></address>, and <phone> </phone> tags surrounding the name, address, and phone number data, which can allow the client device to identify the corresponding fields 108 of the form 106 into which to populate the data. In some examples, the text extraction model 128 can determine which tags to assign to each piece of data in the target content 114 based on its surrounding context. For example, if the image 118 includes a data table with a first column heading of "phone numbers" and a second column heading of "addresses," the text extraction model 128 can determine that the data in those columns corresponds to phone numbers and addresses, respectively, and assign the appropriate tags.

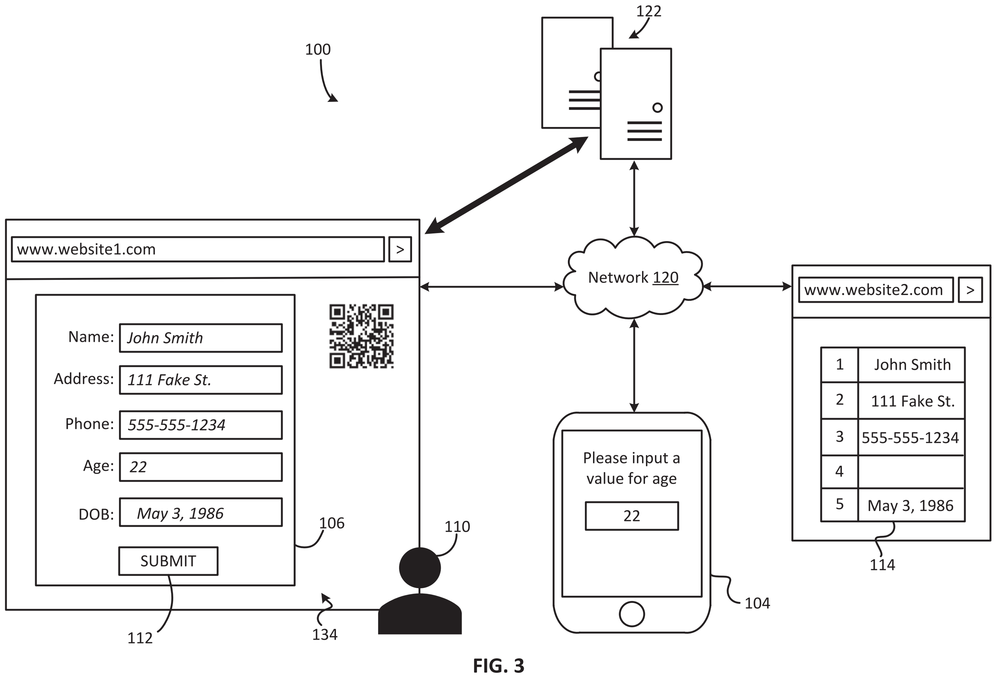

After dynamically updating the webpage 134 with the target content 114, in some examples, the client device displaying the webpage 134 can determine that certain data is still missing. The missing data may be required data (e.g., to submit the form). For example, the client device may determine that the "age" field is still empty (e.g., if no age data was received from the backend server system 122 because none existed in the target content 114). In response to detecting such missing data, the client device can transmit a request 206 for the missing data to the backend server system 122. The request 206 can include an identifier of the missing data. The backend server system 122 can receive the request 206 and, based on the request 206, transmit a related request 204 to the client device 104 for the missing data. The user of the client device 104 can input the missing data, which can be transmitted in a response 202 to the request 204 to the backend server system 122. The backend server system 122 can, in turn, transmit the missing data to the webpage's client device via the communication channel, where it can be automatically inserted into the webpage 134 in real time without a full page reload. If the client device 104 is operated by someone other than the viewer 110 of the webpage 134, this may allow someone other than the viewer 110 of the webpage 134 to insert the missing data into the webpage 134 for the viewer 110. One example of the webpage 134 after it has been updated with the missing data is shown in FIG. 3. Once the form 106 is complete, the viewer 110 may press the submit button 112 to submit the form 106.

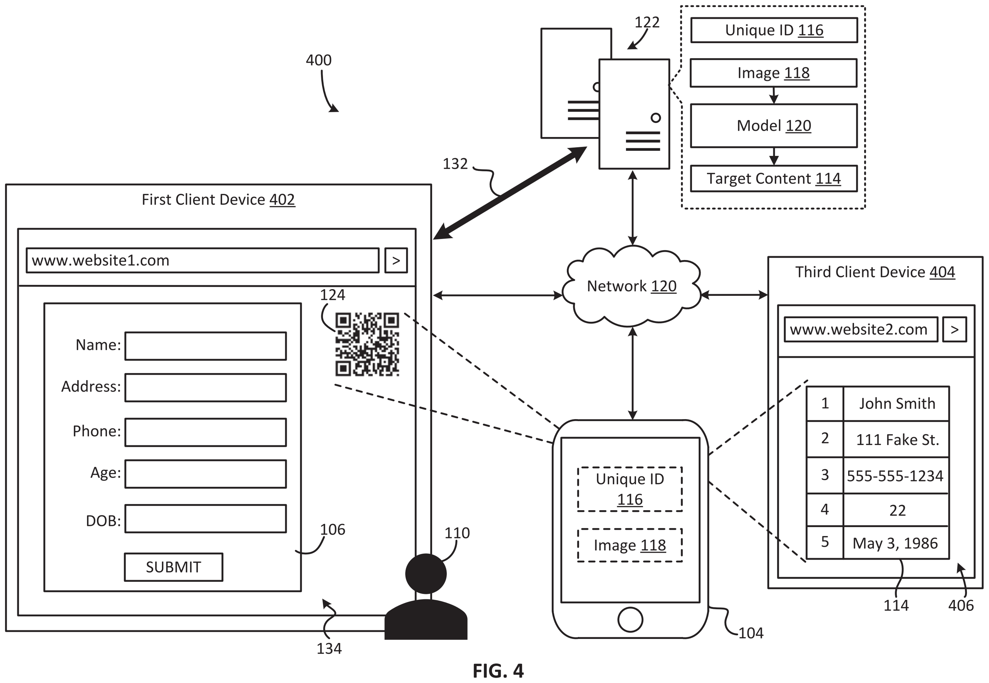

Turning now to FIG. 4, shown is an example of a system 400 that can implement the functionality described above, except that in this example the webpage 134 is displayed on a first client device 402, the target content 114 is displayed on a third client device 404, and the image 118 of the target content 114 is captured by a second client device 104. In some examples, the first client device 402 may be separate from the second client device 104 and the third client device 404. Alternatively, the first client device 402 may be the same as the third client device 404, in which case the target content 114 may be output in a different browser window or a different browser tab from the webpage 134. It will be appreciated that although the target content 114 is output in a webpage 406 in this example, in other examples the target content 114 may be displayed as part of other kinds of electronic files. For example, the target content 114 may be part of an electronic document (e.g., a PDF document) or an electronic spreadsheet (e.g., a Microsoft Excel^{®} spreadsheet) displayed on the third client device 404. The second client device 104 can operate its camera to capture an image of the target content 114 displayed by the third client device 404, and the rest of the process can remain substantially the same as described above.

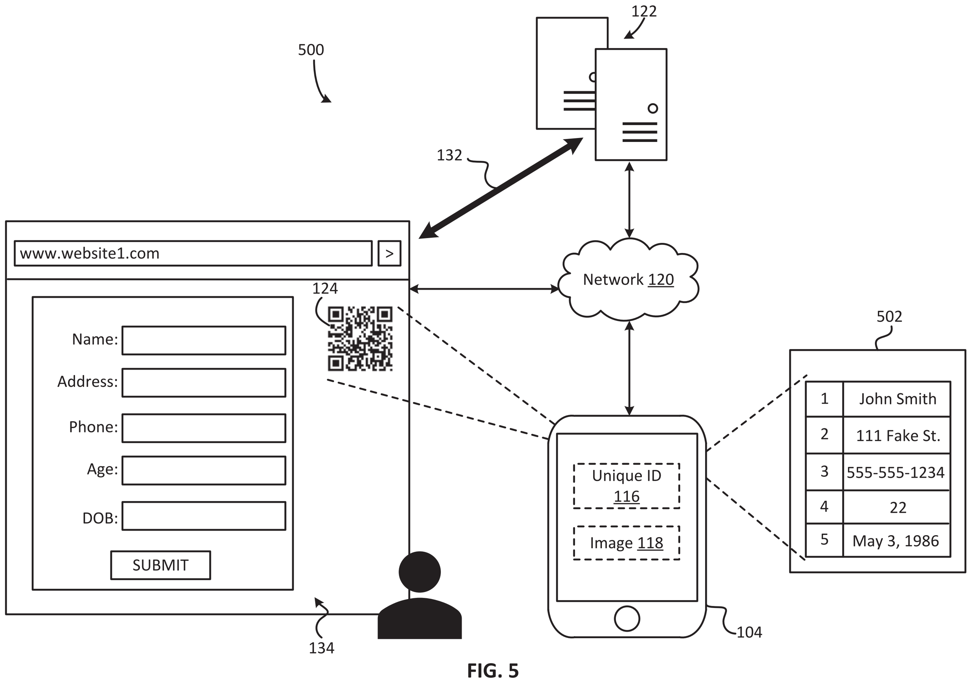

Turning now to FIG. 5, shown is an example of a system 500 which can implement the functionality described above, except that in this example the target content 114 is printed on a physical object 502, such as a piece of paper or a physical device. For instance, the target content 114 may be a serial number printed on an arm of a robot. The client device 104 can operate its camera to capture an image of the target content 114 printed on the physical object, and the rest of the process can remain substantially the same as described above.

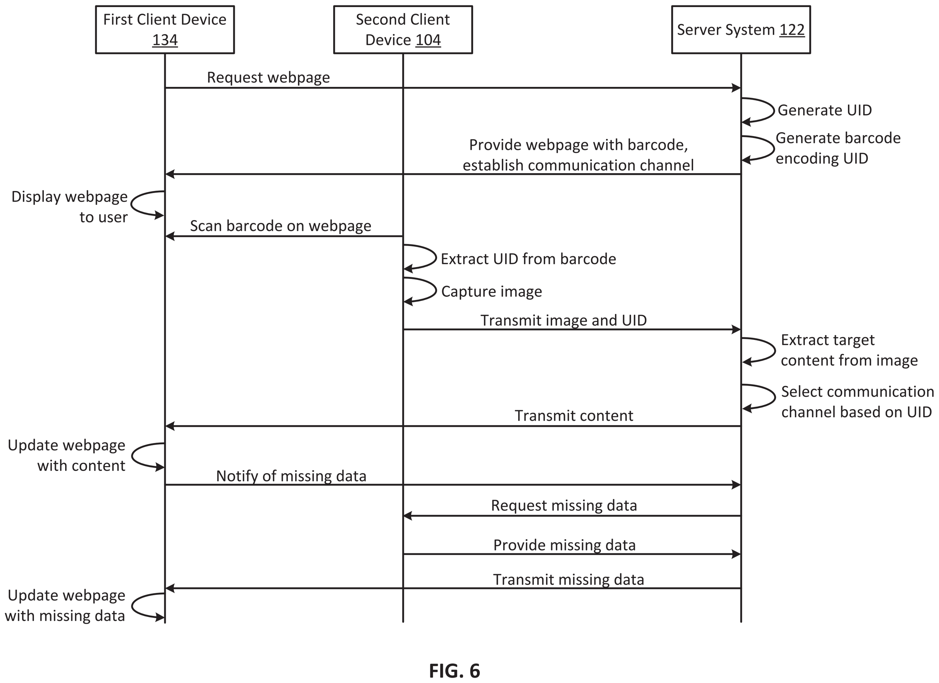

Turning now to FIG. 6, shown is a sequence diagram of an example of a process for dynamically populating a webpage in real time with content from a captured image according to some aspects of the present disclosure. The process of FIG. 6 is described below with exemplary reference to the components of FIGS. 1-5 described above.

The process can begin with the first client device 402 requesting a webpage 134 from the server system 122. In response to receiving the request, the server system 122 can generate a unique identifier 116 for a communication channel 132 configured for use in dynamically updating the webpage 134, encode the unique identifier 116 in a barcode 124, incorporate the barcode 124 into the webpage 134, and provide the webpage 134 (with the barcode 124) to the first client device 402. The server system 122 can also establish the communication channel 132 with the first client device 402.

The first client device 402 can next display the webpage 134 to a viewer 110. While the webpage 134 is being displayed, the second client device 104 can scan the barcode 124 and extract the unique identifier from the barcode 124. The second client device 104 can also capture an image 118 of target content 114 that will be used to populate a portion of the webpage 134. The second client device 104 can then transmit the image 118 and the unique identifier 116 to the server system 122.

The server system 122 can extract the target content 114 from the image 118, for example by inputting the image 118 to a model 128, such as a trained large language model (LLM). If the target content 114 includes a data table, the model 128 can analyze the image 118 to identify the columns and rows forming the cells of the data table, extract the target content 114 from the cells of the data table, and generate an output in a declarative format that maps the target content 114 to one or more specific portions of the webpage 134. Additionally, the server system 122 can select a communication channel 132, from among a plurality of communication channels (e.g., WebSocket connections) corresponding to a plurality of webpages, based on the unique identifier 116. The server system 122 can then transmit the target content 114 to the first client device 402 via the communication channel 132. In response, the first client device 402 can automatically update the webpage 134 to include the target content 114 in the proper locations.

If there is still data missing at this point, for example because a required field of a form is empty, the first client device 402 can transmit a notification of the missing data to the server system 122. The server system 122 can respond to the notification by transmitting a request 204 for the missing data to the second client device 104. A user may input the value for the missing data into the second client device 104. The second client device 104 can then transmit the value in a response 202 to the request 204 to the server system 122. Based on receiving the value, the second client device 104 can transmit the value to the first client device 402, which can update the webpage 134 to include the value for the missing data in real time, without a full page reload.

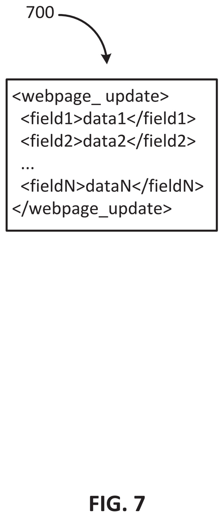

Turning now to FIG. 7, shown is an example of a content update 700 in a declarative format according to some aspects of the present disclosure. The server system 122 can generate the content update 700 using the one or more models 128, based on the image 118. In this example, the content update 700 includes the target content 114 for the update - data1, data2, ..., dataN. The target content 114 is surrounded by metadata tags - <field1></field1>, <field2></field2>, ..., <fieldN></fieldN>. The tags can specify where each piece of target content should go in the webpage 132. The server system 122 can then transmit the content update 700 to the client device that is displaying the webpage 134, so that the webpage 134 can be automatically populated with the target content 114 in the correct locations, without a full page reload.

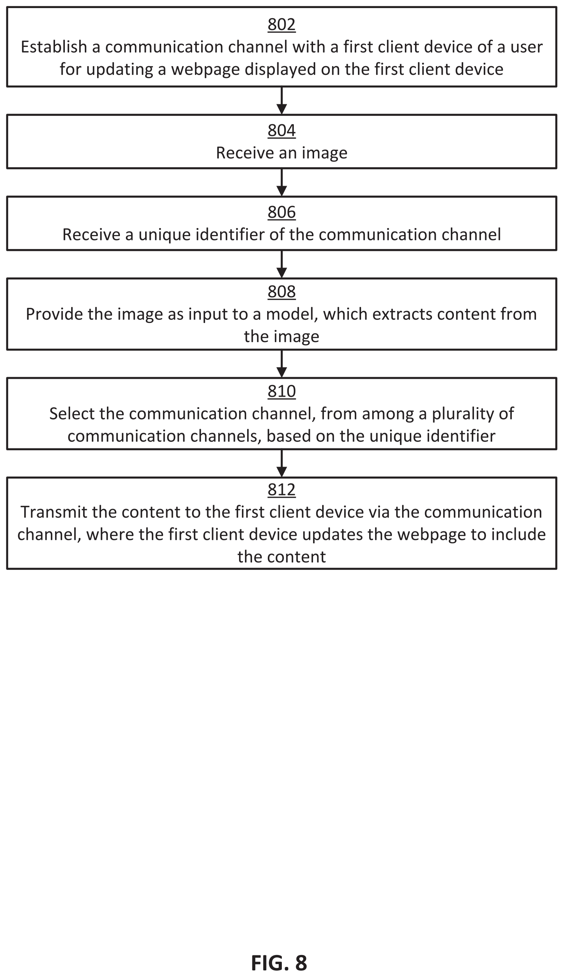

FIG. 8 shows a flowchart of an example of a process for dynamically populating a webpage in real time with content from a captured image according to some aspects of the present disclosure. Other examples may include more operations, fewer operations, different operations, or a different sequence of operations than is shown. The operations of FIG. 8 are described below with exemplary reference to the components of FIGS. 1-7 described above.

In block 802, the server system 122 establishes a communication channel 132 with a first client device 402 of a user (e.g., viewer 110). The communication channel 132 can be for dynamically updating a webpage 134 displayed on the first client device 402 in real time, without requiring a full page reload.

In block 804, the server system 122 receives an image 118 of target content. The server system 122 can receive the image 118 from the first client device 402 or a second client device 104 via one or more networks 120. The image 118 can be captured with a camera, for example by pointing the camera toward a display screen that is outputting the target content 114 or by pointing the camera toward a physical object on which the target content 114 is printed.

In block 806, the server system 122 receives a unique identifier 116 of the communication channel 132. The server system 122 can receive the unique identifier 116 via one or more networks 120, either from the same client device that transmitted the image 118 or from a different client device.

In block 808, the server system 122 provides the image 118 as input to a model 128, which extracts the target content 114 from the image 118. The model 128 may be a single model or an ensemble of models. The model 128 can include a machine-learning model, which can undergo a training process in some examples. The model 128 can generate an output that includes the target content 114. The output may also include metadata 208 that specifies one or more locations in the webpage 134 into which to insert the target content 114.

In block 810, the server system 122 selects the communication channel 132, from among a plurality of communication channels, based on the unique identifier 116. For example, the server system 122 may store a predefined mapping of communication channels to unique identifiers. The server system 122 can access the predefined mapping to determine which communication channel 132 corresponds to the unique identifier 116.

In block 812, the server system 122 transmits the target content 114 (and the metadata 208) to the first client device 402 via the communication channel 132. In response, the first client device 402 automatically updates the webpage 134 in real time to include the target content 114 (e.g., at the locations specified in the metadata 208).

In some examples, the above process may be repeated. For instance, over time, one or more users can capture multiple images and upload them to the server system 122 one-by-one. With each new image, the server system 122 can cause at least a portion of the webpage 134 to be updated to include the content of the new image - e.g., while the webpage 134 is displayed to the viewer 110. Some or all of the images may be uploaded to the server system 122 from the same device or from different devices of one or more users.

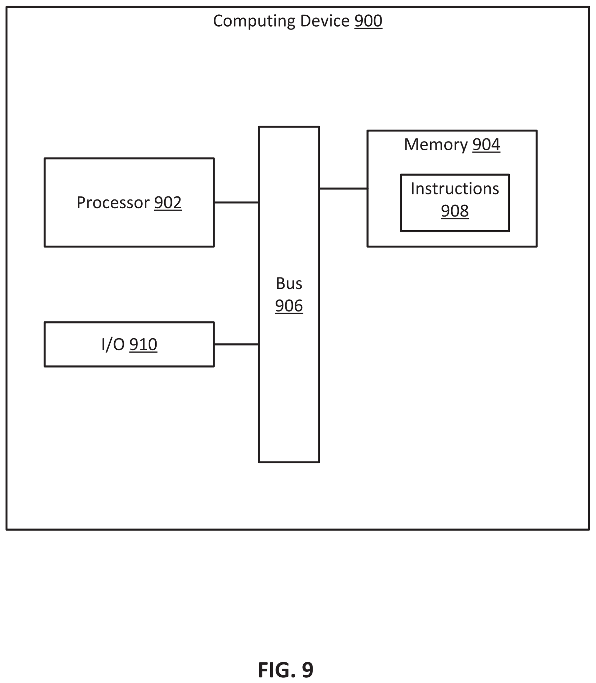

FIG. 9 shows a block diagram of an example of a computing device 900 usable to implement some aspects of the present disclosure. The computing device 900 may correspond to the backend server system 122 or any of the client device 104, 402 or 404 in some examples.

The computing device 900 includes a processor 902 communicatively coupled to a memory 904 by a bus 906. The processor 902 can include one processor or multiple processors. Examples of the processor 902 can include a Field-Programmable Gate Array (FPGA), an application-specific integrated circuit (ASIC), or a microprocessor. The processor 902 can execute instructions 908 stored in the memory 904 to perform operations. The instructions 908 may include processor-specific instructions generated by a compiler or an interpreter from code written in any suitable computer-programming language, such as C, C++, C#, Java, or Python.

The memory 904 can include one memory device or multiple memory devices. The memory 904 can be volatile or non-volatile (e.g., it can retain stored information when powered off). Examples of the memory 904 include electrically erasable and programmable read-only memory (EEPROM), flash memory, or cache memory. At least some of the memory 904 includes a non-transitory computer-readable medium from which the processor 902 can read instructions 908. A computer-readable medium can include electronic, optical, magnetic, or other storage devices capable of providing the processor 902 with the instructions 908 or other program code. Examples of a computer-readable mediums include magnetic disks, memory chips, ROM, random-access memory (RAM), an ASIC, a configured processor, and optical storage.

The computing device 900 can also include input/output (I/O) components 910. Examples of input components can include a mouse, a keyboard, a touchpad, and a touch-screen display. Other examples of input components can include sensors, such as a global positioning system (GPS) unit, a gyroscope, an accelerometer, an inclinometer, and a camera. Examples of output components can include a visual display, a speaker system, and a haptic actuator.

The above description of certain examples, including illustrated examples, has been presented only for the purpose of illustration and description and is not intended to be exhaustive or to limit the disclosure to the precise forms disclosed. Modifications, adaptations, and uses thereof will be apparent to those skilled in the art without departing from the scope of the disclosure. For instance, any examples described herein can be combined with any other examples.

## Claims

1. A method comprising:
establishing, by a server system, a communication channel with a first client device of a user for updating a webpage displayed on the first client device;
receiving, by the server system, an image over a network from a second client device;
receiving, by the server system, a unique identifier of the communication channel over the network from the second client device;
based on receiving the image from the second client device, providing, by the server system, the image as input to a model, the model being configured to extract and output content of the image;
based on receiving the unique identifier from the second client device, selecting, by the server system, the communication channel as a destination for the content extracted from the image; and
based on selecting the communication channel as the destination, transmitting, by the server system, the content to the first client device via the communication channel to update the webpage to include the content in real time.

2. The method of claim 1, wherein the unique identifier is embedded in a barcode displayed on the webpage, and wherein the second client device is configured to:
extract the unique identifier from the barcode by scanning the barcode on the webpage;
after extracting the unique identifier from the barcode on the webpage, transmit the unique identifier over the network to the server system;
capture the image using an imaging device; and
after capturing the image, transmit the image over the network to the server system.

3. The method of claim 2, wherein the barcode is a Quick Response (QR) code.

4. The method of any preceding claim, wherein the image depicts a data table, and the content includes textual or numerical content in the data table.

5. The method of any preceding claim, wherein the model is a trained large language model (LLM) that is configured to:
analyze the image to identify columns and rows forming cells of the data table;
analyze the image to extract the content from the cells of the data table; and
generate the output in a declarative format that correlates the content to one or more specific portions of the webpage.

6. The method of claim 5, wherein the declarative format is a JavaScript Object Notation (JSON) format or an extensible Markup Language (XML) format.

7. The method of any preceding claim, wherein the webpage includes a form, and further comprising automatically populating the form with the content.

8. The method of any preceding claim, further comprising, after transmitting the content to the first client device via the communication channel:
receiving an identifier of missing data from the first client device via the communication channel, the missing data being absent from the content;
transmitting a request for the missing data to the user;
receiving a response that includes the missing data from the user; and
transmitting the missing data to the first client device via the communication channel to update the webpage to include the missing data in real time.

9. The method of any preceding claim, wherein the model generates metadata specifying one or more specific locations in the webpage into which to insert the content, and further comprising:
transmitting, by the server system, the metadata to the first client device via the communication channel for causing the content to be inserted into the specific locations of the webpage while the webpage is displayed on the first client device.

10. The method of any preceding claim, wherein the first client device is the same as the second client device.

11. The method of any preceding claim, wherein the first client device is different than the second client device.

12. The method of any preceding claim, wherein the communication channel is a Websocket channel.

13. The method of any preceding claim, wherein the communication channel is selected from among a plurality of communication channels corresponding to a plurality of webpages.

14. A server system comprising:
one or more processors; and
one or more memories storing instructions that are executable by the one or more processors for causing the one or more processors to perform the method of any preceding claim.

15. A non-transitory computer-readable medium comprising program code that is executable by one or more processors for causing the one or more processors to perform the method of any of claims 1 to 13.
